# EUROPEAN PATENT SPECIFICATION

(11) **EP 0 598 627 B1**
(45) Date of publication and mention of the grant of the patent: **27.08.1997**
(21) Application number: 93309243.9
(22) Date of filing: 19.11.1993
(51) Int. Cl.: C08L 83/04, C08J 3/24, C08J 5/12

(54) **Silicone resin/silicone rubber composites, and methods for making them**
Komposite aus Siliconharz/Siliconkautschuk und Verfahren zu ihrer Herstellung
Matériau composite à base d'une résine de silicone et un élastomère de silicone et son procédé de préparation

(30) Priority: 19.11.1992 JP 333616/92; 19.08.1993 JP 226409/93
(43) Date of publication of application: 25.05.1994
(73) Proprietor: SHIN-ETSU CHEMICAL CO., LTD., Chiyoda-ku Tokyo (JP)
(72) Inventor: Meguriya, Noriyuki, Annaka-shi, Gunma-ken (JP); Yoshida, Takeo, Annaka-shi, Gunma-ken (JP)
(74) Representative: Stoner, Gerard Patrick

(56) References cited:
- EP-A- 0 480 680
- DE-B- 1 907 980

## Description

This invention relates to silicone resin/silicone rubber composite materials and their manufacture. Such materials find use in various industrial fields, including electric and electronic equipment, business machines, automobiles, and precision machines.

### Prior Art

A number of methods are known in the art for producing shapes having two distinct silicone parts integrated together. Most methods are by separately heat molding distinct silicone compositions and adhesively joining the molded parts into an integral product.

These methods, however, suffer from the problem that adhesive joining of distinct silicone parts is difficult and time consuming and even when possible, the bond is weak, resulting in an integral product having low dimensional accuracy.

In addition to these methods, integral products in which silicone resin is integrated with silicone rubber can also be produced by coating silicone rubber with silicon resin, for example. The coating method is difficult to carry out and finds use only in coating applications. Because of fragility of the silicone resin itself and weak bond between silicone resin and silicon rubber, the resulting products are inadequate for use as composite material.

An integral product having combined silicones of different hardnesses has been used as a coating on fiber optics. In this proposal, no attention is paid to the bond between distinct silicone parts.

Over the past years, silicone rubber has found a spreading range of application in electric and electronic equipment, business machines and automobiles because of its recognized reliability in heat resistance, weatherability and electrical characteristics. Currently available composite materials of silicone rubber with thermoplastic or thermosetting hydrocarbon resins, however, do not take full advantage of the characteristics of silicone rubber.

EP-A-0 480 680 describes laminates obtained by curing an organopolysiloxane on the surface of a cured siloxane rubber.

Integrally formed silicone resin/silicone rubber materials in which silicone resin and silicone rubber are firmly bonded would be highly desirable.

Therefore, objects of the present invention are to provide silicone resin/ silicone rubber composites in which silicone resin and silicone rubber are firmly bonded, and methods for making them.

We have found that by using a phenyl-containing organopolysiloxane as a silicone resin base, curing or semi-curing an addition curing type silicone resin composition comprising the phenyl-containing organopolysiloxane, placing an addition or peroxide curing type silicone rubber composition in close contact with the cured or semi-cured resin, and heat curing the silicone rubber composition to integrate the rubber to the previously cured or semi-cured resin, one can obtain a composite material in which silicone resin and silicone rubber are firmly bonded. The order of first curing an addition curing type silicone resin composition and then curing a silicone rubber composition to the cured resin permits the integration of silicone resin and silicone rubber to be briefly accomplished in a simple manner, typically without adhesive. We have obtained silicone resin/silicone rubber composites having a sufficient bonding force for practical use.

In a more specific aspect, there is provided a silicone resin/silicone rubber composite material comprising a cured product of an addition curing type silicone resin composition integrated with a cured product of an addition or peroxide curing type silicone rubber composition. The silicone resin composition is comprised of an organopolysiloxane of the following general formula (1):

Rₙ(C₆H₅)ₘSiO_{(4 - n - m)/2} (1)

wherein R is independently a substituted or unsubstituted aliphatic or alicyclic monovalent hydrocarbon radical, 0.1 to 30 mol% of R being an aliphatic unsaturated hydrocarbon radical, and letters n and m are positive numbers satisfying 1 ≤ n + m < 2 and 0.05 ≤ m/(n + m) ≤ 0.5. The cured resin is typically harder than the cured rubber. The cured resin should have a hardness of at least 85 on JIS A scale. The cured rubber should have a 5 hardness of not more than 85 on JIS A scale.

According to another aspect of the invention, a method for preparing a silicone resin/silicone rubber composite material includes the steps of: curing or semi-curing an 10 addition curing type silicone resin composition comprising a phenyl-containing organopolysiloxane e.g. of formula (1), placing an addition or peroxide curing type silicone rubber composition in close contact with the cured or semi-cured product, and heat 15 curing the silicone rubber composition.

### BRIEF DESCRIPTION OF THE DRAWING

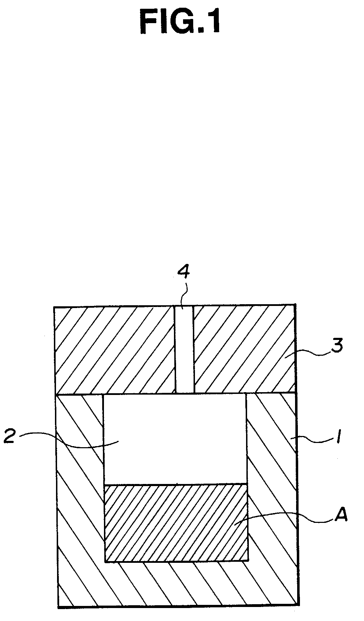

The only figure, FIG. 1 is a schematic cross section of a mold used in the manufacture 20 of a silicone resin/silicone rubber composite material.

### DETAILED DESCRIPTION

The silicone resin/silicone rubber composite includes an addition curing type silicone resin composition and an addition or peroxide curing type silicone rubber composition which are heat cured to form an integral or one-piece product. The silicone resin composition typically comprises an organopolysiloxane of the general formula (1).

Rₙ(C₆H₅)ₘSiO_{(4 - n - m)/2} (1)

In formula (1), R is independently a substituted or unsubstituted aliphatic or alicyclic monovalent hydrocarbon radical, preferably having 1 to 20 carbon atoms, more preferably 1 to 10 carbon atoms. Exemplary hydrocarbon radicals include saturated hydrocarbon radicals, for example, alkyl radicals such as methyl, ethyl and propyl and cycloalkyl radicals, aliphatic unsaturated hydrocarbon radicals such as vinyl, allyl, propenyl and butenyl, halo-substituted hydrocarbon radicals such as 3,3,3-trifluoropropyl, and cyano-substituted hydrocarbon radicals. It is usually required that 0.1 to 30 mol%, preferably 1 to 20 mol% of R be an aliphatic unsaturated hydrocarbon radical, preferably an alkenyl radical. If the content of aliphatic unsaturated hydrocarbon radical is less than 0.1 mol%, the resulting resin is typically less hard and poorly adhesive to silicone rubber. If the content of aliphatic unsaturated hydrocarbon radical is more than 30 mol%, the resin typically becomes brittle because of too many crosslinking sites. Letters n and m are positive numbers satisfying 1 ≦ n + m < 2; preferred content of phenyl radical is 5 to 50 mol% of the overall organic radicals, that is, 0.05 ≦ m/(n + m) ≦ 0.5. With a phenyl content outside this range, the silicone resin is typically brittle in molded form.

Such organopolysiloxanes can be prepared by conventional well-known methods, for example, by co-hydrolysis of dimethylchlorosilane, phenyltrichlorosilane and methylvinyldichlorosilane or by co-hydrolysis of dimethyldimethoxysilane, phenyltrimethoxysilane and vinyltrimethoxysilane in the presence of an alkali or acid catalyst.

Preferably the silicone resin composition used herein includes as major components,
(a) an organopolysiloxane of formula (1),
(b) an organohydrogenpolysiloxane which is liquid at room temperature, and
(c) an addition reaction catalyst, and optionally,
(d) an organopolysiloxane containing two or more alkenyl radicals in a molecule which is liquid or raw rubber like at room temperature when it is desired to control the hardness of the silicone resin composition to the above-defined value or to control the viscosity or the like.

The organohydrogenpolysiloxane (b) may have the following formula:

RₐH_{b}SiO_{(4-a-b)/2}

wherein R represents an unsubstituted or substituted monovalent hydrocarbon radical having 1 to 10 carbon atoms excluding an aliphatic unsaturated radical, a is a positive number of 1 to 2.1, b is a positive number of 0.5 to 1 and a + b is 1.5 to 2.6.

Examples of the organohydrogenpolysiloxane as component (b) include methylhydrogenpolysiloxane blocked with a trimethylsiloxy radical at either end, dimethylsiloxanemethylhydrogenpolysiloxane copolymers blocked with a trimethylsiloxy radical at either end, dimethylsiloxane blocked with a dimethylhydrogensiloxy radical at either end, dimethylsiloxane-methylhydrogenpolysiloxane copolymers blocked with a dimethylhydrogensiloxy radical at either end, methylhydrogenpolysiloxane-diphenylsiloxane blocked with a trimethylsiloxy radical at either end, methylhydrogenpolysiloxane-dimethylsiloxane blocked with a trimethylsiloxy radical at either end, copolymers consisting of (CH₃)₂HSiO_{1/2} and SiO_{4/2} units, copolymers consisting of (CH₃)₃SiO_{1/2}, (CH₃)₂HSiO_{1/2} and SiO_{4/2} units, and copolymers consisting of (CH₃)₂HSiO_{2/1}, SiO_{4/2} and (C₆H₅)₃SiO_{3/2} units. The organohydrogenpolysiloxane (b) is preferably blended in an amount of about 1 to 50 parts, more preferably about 5 to 30 parts by weight per 100 parts by weight of organopolysiloxane (a). With less amounts of organohydrogenpolysiloxane, the silicone resin would have low hardness. With more amounts of organohydrogenpolysiloxane, the cured resin would become brittle failing to provide satisfactory strength.

Examples of the addition reaction catalyst (c) include platinum black, platinic chloride, chloroplatinic acid, reaction products of chloroplatinic acid with monohydric alcohols, complexes of chloroplatinic acid with olefins, platinum bisacetoacetate, palladium catalysts, and rhodium catalysts. The catalyst may be used in a catalytic amount.

Examples of the organopolysiloxane containing two or more alkenyl radicals in a molecule which is liquid or raw rubber-like at room temperature (d) include dimethylpolysiloxane blocked with a dimethylvinylsilyl radical at either end, dimethylpolysiloxane-methylvinylsiloxane copolymers blocked with a dimethylvinylsilyl radial at either end, dimethylpolysiloxane-diphenylsiloxane-methylvinylsiloxane copolymers blocked with a dimethylvinylsilyl radical at either end, dimethylpolysiloxane-diphenylsiloxane-methylvinylsiloxane copolymers blocked with a methylphenylvinylsilyl radical at either end, and methyl(3,3,3-trifluoropropyl)polysiloxane blocked with a dimethylvinylsilyl radical at either end. The organopolysiloxane (d) is preferably blended in an amount of 0 to 100 parts by weight per 100 parts by weight of organopolysiloxane (a), more preferably 0 to 50 parts, particularly 1 to 50 parts by weight per 100 parts by weight of organopolysiloxane (a) so as not to detract from the strength of the resin.

In addition to the above-mentioned components, fillers may be blended in the silicone resin composition for adjusting the flow thereof or improving the mechanical strength of molded parts. Exemplary fillers include reinforcing fillers such as precipitated silica, fumed silica, calcined silica, and fumed titanium oxide, and non-reinforcing fillers such as ground quartz, diatomaceous earth, asbestos, aminosilicic acid, iron oxide, zinc oxide, and calcium carbonate. The fillers may be used with or without surface treatment with organic silicon compounds such as hexamethyldisilazane, trimethylchlorosilane and polymethylsiloxane. If desired, pigments, heat resistance modifiers, flame retardants or plasticizers may be blended.

The silicone rubber composition used herein may be either of the addition reaction curing type or of the peroxide curing type. The addition type silicone rubber composition preferably includes as major components, (e) an organopolysiloxane containing on average at least two lower alkenyl radicals in a molecule,
(f) an organohydrogenpolysiloxane having at least two hydrogen atoms directly attached to silicon atoms in a molecule, and
(g) an addition reaction catalyst and is liquid or raw rubber-like at room temperature.

Examples of the organopolysiloxane (e) include dimethylpolysiloxane blocked with a dimethylvinylsilyl radical at either end, dimethylpolysiloxane-methylvinylsiloxane copolymers blocked with a dimethylvinylsilyl radical at either end, dimethylpolysiloxane-diphenylsiloxane-methylvinylsiloxane copolymers blocked with a dimethylvinylsilyl radical at either end, dimethylpolysiloxane-diphenylsiloxane-methylvinylsiloxane copolymers blocked with a methylphenylvinylsilyl radical at either end, and methyl(3,3,3-trifluoropropyl)polysiloxane blocked with a dimethylvinylsilyl radical at either end. These organopolysiloxanes preferably have a viscosity of 100 to 1,000,000 centipoise at 25°C.

The organohydrogenpolysiloxane (b) may have the following formula:

RₐH_{b}SiO_{(4-a-b)/2}

wherein R represents an unsubstituted or substituted monovalent hydrocarbon radical having 1 to 10 carbon atoms excluding an aliphatic unsaturated radical, a is a positive number of 1 to 2.1, b is a positive number of 0.5 to 1 and a + b is 1.5 to 2.6.

Examples of the organohydrogenpolysiloxane (f) include methylhydrogenpolysiloxane blocked with a trimethylsiloxy radical at either end, dimethylsiloxane-methylhydrogenpolysiloxane copolymers blocked with a trimethylsiloxy radical at either end, dimethylsiloxane blocked with a dimethylhydrogensiloxy radical at either end, and dimethylsiloxane-methylhydrogenpolysiloxane copolymers blocked with a dimethylhydrogensiloxy radical at either end. These organohydrogenpolysiloxanes preferably have a viscosity of 1 to 1,000 centipoise at 25 °C. The organohydrogenpolysiloxane (f) is preferably blended in an amount of 0.1 to 50 parts, more preferably 0.5 to 20 parts by weight per 100 parts by weight of organopolysiloxane (e).

Examples of the addition reaction catalyst (g) include platinum black, platinic chloride, chloroplatinic acid, reaction products of chloroplatinic acid with monohydric alcohols, complexes of chloroplatinic acid with olefins, platinum bisacetoacetate, palladium catalysts, and rhodium catalysts. The catalyst may be used in a catalytic amount.

In addition to the above-mentioned components, fillers may be blended in the silicone rubber composition for adjusting the flow thereof or improving the mechanical strength of molded parts. Exemplary fillers include reinforcing fillers such as precipitated silica, fumed silica, calcined silica, and fumed titanium oxide, and non-reinforcing fillers such as ground quartz, diatomaceous earth, asbestos, aminosilicic acid, iron oxide, zinc oxide, and calcium carbonate. The fillers may be used with or without surface treatment with organic silicon compounds such as hexamethyl-disilazane, trimethylchlorosilane and polymethylsiloxane. If desired, pigments, heat resistance modifiers, flame retardants or plasticizers may be blended.

The peroxide curing type silicone rubber composition preferably includes as major components,
(h) an organopolysiloxane containing on average at least two lower alkenyl radicals in a molecule and
(i) an organic peroxide catalyst and is liquid or raw rubber-like at room temperature.

Examples of the organopolysiloxane (h) include dimethylpolysiloxane blocked with a dimethylvinylsilyl radical at either end, dimethylpolysiloxane-methylvinylsiloxane copolymers blocked with a dimethylvinylsilyl radical at either end, dimethylpolysiloxane-diphenylsiloxane-methylvinylsiloxane copolymers blocked with a dimethylvinylsilyl radical at either end, dimethylpolysiloxane blocked with a trivinylsiloxy radical at either end, dimethylpolysiloxane-methylvinylsiloxane copolymers blocked with a trivinylsiloxy radical at either end, dimethylpolysiloxane-diphenylsiloxane-methylvinylsiloxane copolymers blocked with a methylphenylvinylsilyl radical at either end, and methyl(3,3,3-trifluoropropyl)polysiloxane blocked with a dimethylvinylsilyl radical at either end.

Examples of the organic peroxide catalyst (i) include benzoyl peroxide, o-monochlorobenzoyl peroxide, bis-2,4-dichlorobenzoyl peroxide, dicumyl peroxide, t-butyl benzoate, di-t-butyl peroxide, p-monochlorobenzoyl peroxide, t-butylcumyl peroxide, 1,1,-bis(t-butylperoxy)-3,3,5-trimethylcyclohexane, 2,5-dimethyl-2,5-bis(t-butylperoxy)hexane, and 1,6-bis(t-butylperoxycarboxy)hexane. The catalyst may be used in a catalytic amount.

In addition to the above-mentioned components, fillers may be blended in the silicone rubber composition for adjusting the flow thereof or improving the mechanical strength of molded parts. Exemplary fillers include reinforcing fillers such as precipitated silica, fumed silica, calcined silica, and fumed titanium oxide, and non-reinforcing fillers such as ground quartz, diatomaceous earth, asbestos, aminosilicic acid, iron oxide, zinc oxide, and calcium carbonate. The fillers may be used with or without surface treatment with organic silicon compounds such as hexamethyl-disilazane, trimethylchlorosilane and polymethylsiloxane. If desired, pigments, heat resistance modifiers, flame retardants or plasticizers may be blended.

For taking full advantage of the characteristics of silicone resin and silicone rubber, respectively, it is preferred that a cured product of the silicone resin composition have a hardness of at least 85, especially at least 90 on JIS A scale, and a cured product of the silicone rubber composition have a hardness of up to 85, especially up to 70 on JIS A scale.

The composite material may have any desired construction. Typically a portion or all of one surface of a cured product of a silicone rubber composition (simply referred to as silicone rubber) overlies a portion or all of one surface of a cured product of a silicone resin composition (simply referred to as silicone resin). Alternatively, a silicone resin or rubber layer is sandwiched between silicone rubber or resin layers.

The composite material has silicone resin and silicone rubber integrated firmly together, typically without using an adhesive so that it is more effective for preventing strain occurrence due to different coefficients of thermal expansion as compared with composite materials of silicone rubber with other resins. Since both parts have siloxane bonds as the backbone, they both have the advantages of heat resistance, low-temperature properties and weatherability attributable to the siloxane bonds. Therefore, the composite material finds application e.g., as connectors, gaskets, and insulating parts in electric and electronic equipment, business machines, automobiles, and precision machines.

The silicone resin/silicone rubber composite material may preferably be prepared by first molding a silicone resin composition into a desired shape by any suitable technique such as casting, compression molding, injection molding, extrusion molding and transfer molding, heat curing or semi-curing it, then molding a silicone rubber composition in close contact with the cured or semi-cured resin by any suitable technique, and curing the silicone rubber composition to the cured resin. The semi-cured silicone resin should reach at least a curing level capable of forming a non-intermixing interface when the silicone rubber composition is molded thereover in a close contact relationship. The conditions under which the silicone resin and rubber compositions are cured may be suitably determined without undue experimentation. After they are cured, they may be subject to post-curing if desired.

### EXAMPLE

Examples of the present invention are given below by way of illustration and not by way of limitation. Unless otherwise stated, all parts and percents are by weight.

### Example 1

A silicone resin composition (A) was prepared by mixing 100 parts of an organopolysiloxane of the average compositional formula (2) shown below, 10 parts of an organohydrogenpolysiloxane of the average compositional formula (3) shown below, and 1.2 parts of an isopropanol solution of chloroplatinic acid (platinum content 0.20%).

(CH₃)_{1.02}(C₆H₅)_{0.40}(CH₂=CH)_{0.08}SiO_{1.25} (2)

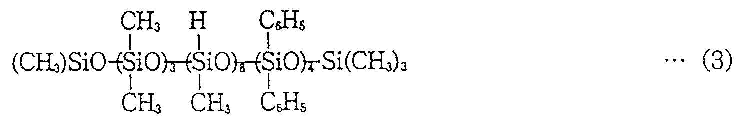

A silicone rubber composition (B) was prepared by adding 30 parts of dry silica having a specific surface area of 200 m²/g, 5 parts of dimethoxydimethylsilane, and 1 part of water to 100 parts of a dimethylpolysiloxane blocked with a dimethylvinylsiloxy radical at either end and having a viscosity of 100 poise at 25 °C, mixing them while heating the mixture at 150 °C for 3 hours, and adding to the mixture 50 parts of the same polysiloxane as above, 0.4 parts of a dimethylsiloxane copolymer (consisting of 50 mol% of dimethylsiloxane units and 50 mol% of methylhydrogensiloxane units) blocked with a trimethylsilyl radical at either end and having a viscosity of 10 centipoise at 25%, and 0.1 part of an isopropanol solution of chloro-platinic acid (platinum content 0.50%).

Next, silicone resin composition (A) was poured into a cavity 2 of a lower mold section 1 to about one half of the cavity volume as shown in FIG. 1 and cured therein by heating at 150 °C for 5 minutes. An upper mold section 3 was placed on the lower mold section 1 to close the cavity 2. Silicone rubber composition (B) was injected onto the cured silicone resin (A) through a port 4 in the upper mold section 3 at an injection pressure of about 60 kg/cm² and cured therein by heating at 150 °C for 5 minutes. There was obtained an integral product in which silicone resin and silicone rubber were firmly bonded. The product could be removed from the mold without sticking to the mold wall.

### Example 2

A silicone rubber composition (C) was prepared by adding 30 parts of dry silica having a specific surface area of 200 m²/g, 5 parts of dimethoxydimethylsilane, and 1 part of water to 100 parts of a dimethylpolysiloxane blocked with a trivinylsiloxy unit at either end and having a viscosity of 1,000 poise at 25%, mixing them while heating the mixture at 150 °C for 3 hours, and adding to the mixture 50 parts of the same polysiloxane as above and 1.0 part of 1,6-bis(t-butylperoxy)hexane.

As in Example 1, silicone resin composition (A) was cured in the mold and silicone rubber composition (C) was injected onto the cured silicone resin (A) and cured by heating at 150 °C for 5 minutes. There was obtained an integral product in which silicone resin and silicone rubber were firmly bonded. The product could be removed from the mold without sticking to the mold wall.

There have been described silicone resin/silicone rubber composite materials in which silicone resin and silicone rubber are firmly joined together. They are useful in various industrial fields including electric and electronic equipment, business machines, automobiles, and precision machines.

Although some preferred embodiments have been described, many modifications and variations may be made thereto in the light of the above teachings. It is therefore to be understood that within the scope of the appended claims, the invention may be practiced otherwise than as specifically described.

## Claims

1. A silicone resin/silicone rubber composite material comprising a cured product of an addition curing type silicone resin composition having a hardness of at least 85 on JIS A scale, integrated with a cured product of an addition or peroxide curing type silicone rubber composition having a hardness of up to 85 on JIS A scale,
said silicone resin composition comprising an organopolysiloxane of the following general formula (1):
Rₙ(C₆H₅)ₘSiO_{(4 - n - m)/2} (1)
wherein R is independently a substituted or unsubstituted aliphatic or alicyclic monovalent hydrocarbon radical, 0.1 to 30 mol% of R being an aliphatic unsaturated hydrocarbon radical, and letters n and m are positive numbers satisfying 1 ≦ n + m < 2 and 0.05 ≦ m/(n + m) ≦ 0.5.

2. A method for preparing a silicone resin/silicone rubber composite material comprising the steps of:
at least partially curing an addition curing type silicone resin composition,
placing an addition or peroxide curing type silicone rubber composition in close contact with the at least partially cured product, and
heat curing the silicone rubber composition,
said silicone resin composition comprising an organopolysiloxane of the following general formula (1):
Rₙ(C₆H₅)ₘSiO_{(4 - n - m)/2} (1)
wherein R is independently a substituted or unsubstituted aliphatic or alicyclic monovalent hydrocarbon radical, 0.1 to 30 mol% of R being an aliphatic unsaturated hydrocarbon radical, and letters n and m are positive numbers satisfying 1 ≦ n **+** m < 2 and 0.05 ≦ m/(n + m) ≦ 0.5, the cured resin having a hardness of at least 85 on JIS A scale, and the cured rubber having a hardness of up to 85 on JIS A scale.

## Patentansprüche

1. Silikonharz/Silikongummi-Verbundmaterial, umfassend ein gehärtetes Produkt einer Silikonharzzusammensetzung des Additionshärtungstyps mit einer Härte von zumindest 85 auf der JIS A-Skala, einstückig ausgebildet mit einem gehärteten Produkt einer Silikonkautschukzusammensetzung des Additions- oder Peroxidhärtungstyps mit einer Härte von bis zu 85 auf der JIS A-Skala,
wobei die Silikonharzzusammensetzung ein Organopolysiloxan der folgenden allgemeinen Formel (1) umfasst:
Rₙ(C₆H₅)ₘSiO_{(4-n-m)/2} (1)
worin R unabhängig ein substituierter oder unsubstituierter aliphatischer oder alizyklischer einwertiger Kohlenwasserstoffrest ist, wobei 0,1 bis 30 Mol-% von R aliphatische ungesättigte Kohlenwasserstoffreste sind, und die Buchstaben n und m positive Zahlen sind, die 1 ≤ n + m < 2 und 0,05 ≤ m/ (n + m) ≤ 0,5 erfüllen.

2. Verfahren zur Herstellung eines Silikonharz/Silikongummi-Verbundmaterials, umfassend die folgenden Schritte:
zumindest teilweises Härten einer Silikonharzzusammensetzung des Additionshärtungstyps,
In-engen-Kontakt-Bringen einer Silikonkautschukzusammensetzung des Additions- oder Peroxidhärtungstyps mit dem zumindest teilweise gehärteten Produkt, und
Wärmehärten der Silikonkautschukzusammensetzung,
wobei die Silikonharzzusammensetzung ein Organopolysiloxan der folgenden allgemeinen Formel (1) umfasst:
Rₙ(C₆H₅)ₘSiO_{(4-n-m)/2} (1)
worin R unabhängig ein substituierter oder unsubstituierter aliphatischer oder alizyklischer einwertiger Kohlenwasserstoffrest ist, wobei 0,1 bis 30 Mol-% von R aliphatische ungesättigte Kohlenwasserstoffreste sind, und die Buchstaben n und m positive Zahlen sind, die 1 ≤ n + m < 2 und 0,05 ≤ m/ (n + m) ≤ 0,5 erfüllen, wobei das gehärtete Harz eine Härte von zumindest 85 auf der JIS A-Skala aufweist und der gehärtete Kautschuk eine Härte von bis zu 85 auf der JIS A-Skala aufweist.

## Revendications

1. Matériau composite de résine de silicone/caoutchouc de silicone comprenant un produit durci d'une composition de résine de silicone du type durcissant par addition ayant une dureté d'au moins 85 à l'échelle JIS A, où est intégré un produit durci d'une composition d'un caoutchouc de silicone du type durcissant par addition au péroxyde ayant une dureté pouvant atteindre 85 à l'échelle JIS A,
ladite composition de résine de silicone comprenant un organopolysiloxane de la formule générale suivante (1) :
Rₙ(C₆H₅)ₘSiO_{(4-n-m)/2} (1)
où R est indépendamment un radical hydrocarbure monovalent substitué ou non substitué aliphatique ou alicyclique, 0,1 à 30% en moles de R étant un radical hydrocarbure aliphatique insaturé, et les lettres n et m sont des nombres positifs satisfaisant à 1 ≦ n + m < 2 et 0,05 ≦ m/(n + m) ≦ 0,5.

2. Méthode de préparation d'un matériau composite de résine de silicone/caoutchouc de silicone comprenant les étapes de :
durcir au moins partiellement une composition de résine de silicone du type durcissant par addition,
placer une composition d'un caoutchouc de silicone du type durcissant par addition ou au péroxyde en proche contact avec le produit au moins partiellement durci, et
durcir à la chaleur la composition de caoutchouc de silicone,
ladite composition de résine de silicone comprenant un organopolysiloxane de la formule générale suivante (1) :
Rₙ(C₆H₅)ₘSiO_{(4-n-m)/2} (1)
où R est indépendamment un radical hydrocarbure monovalent aliphatique ou alicyclique substitué ou non substitué, 0,1 à 30% en moles de R étant un radical hydrocarbure aliphatique insaturé et les lettres n et m sont des nombres positifs satisfaisant à 1 ≦ n + m < 2 et 0,05 ≦ m/(n + m) ≦ 0,5, la résine durci ayant une dureté d'au moins 85 à l'échelle JIS A et le caoutchouc durci ayant une dureté pouvant atteindre 85 à l'échelle JIS A.
